# EUROPÄISCHE PATENTSCHRIFT

(11) **EP 3 772 126 B1**
(45) Veröffentlichungstag und Bekanntmachung des Hinweises auf die Patenterteilung: **30.06.2021**
(21) Anmeldenummer: 19189816.2
(22) Anmeldetag: 02.08.2019
(51) Int. Cl.: H01M 8/04014, H01M 8/04029, H01M 8/04082, H01M 8/065

(54) **SYSTEM UND VERFAHREN ZUM WÄRMEMANAGEMENT VON HOCHTEMPERATURSYSTEMEN**
SYSTEM AND METHOD FOR THERMAL MANAGEMENT OF HIGH TEMPERATURE SYSTEMS
SYSTÈME ET PROCÉDÉ DE GESTION DE LA CHALEUR DE SYSTÈMES À HAUTE TEMPÉRATURE

(43) Veröffentlichungstag der Anmeldung: 03.02.2021
(73) Patentinhaber: Helmholtz-Zentrum hereon GmbH, 21502 Geesthacht (DE)
(72) Erfinder: Bellosta von Colbe, José M., 21465 Wentorf (DE); Klassen, Thomas, 21465 Wentorf (DE); Dornheim, Martin, 21391 Reppenstedt (DE); Taube, Klaus, 22549 Hamburg (DE)
(74) Vertreter: Uexküll & Stolberg

(56) Entgegenhaltungen:
- DE-B3-102015 006 944
- JP-A- H07 186 711
- SHESHPOLI MOHAMAD ALIJANPOUR ET AL: "Thermodynamic analysis of waste heat recovery from hybrid system of proton exchange membrane fuel cell and vapor compression refrigeration cycle by recuperative organic Rankine cycle", JOURNAL OF THERMAL ANALYSIS AND CALORIMETRY, KLUWER, DORDRECHT, NL, Bd. 135, Nr. 3, 5. Mai 2018 (2018-05-05), Seiten 1699-1712, XP036716944, ISSN: 1388-6150, DOI: 10.1007/S10973-018-7338-0 [gefunden am 2018-05-05]

## Beschreibung

### GEBIET DER ERFINDUNG

Die vorliegende Erfindung betrifft ein Verfahren zum Wärmemanagement von Hochtemperatursystemen. Insbesondere betrifft die vorliegende Erfindung das Wärmemanagement von Metallhydrid-Speichern, beispielsweise zur Verbesserung des Wirkungsgrads von mit Wasserstoff aus einem Metallhydrid-Speicher betriebenen Niedertemperatur-Brennstoffzellen bei der Stromerzeugung.

### HINTERGRUND DER ERFINDUNG

Bei der Elektrolyse von Wasser werden die Wassermoleküle durch elektrischen Strom in Wasserstoff (H₂) und Sauerstoff (O₂) zerlegt. In einer Brennstoffzelle läuft dieser Vorgang in umgekehrter Richtung ab. Durch die elektrochemische Verbindung von Wasserstoff (H₂) und Sauerstoff (O₂) zu Wasser entsteht elektrischer Strom mit hohem Wirkungsgrad.

Die technische Umsetzung des Prinzips der Brennstoffzelle hat zu unterschiedlichen Lösungen, und zwar mit verschiedenartigen Elektrolyten und mit Betriebstemperaturen zwischen 10°C und 1000°C, geführt. In Abhängigkeit von ihrer Betriebstemperatur werden die Brennstoffzellen in Nieder-, Mittel- und Hochtemperatur Brennstoffzellen eingeteilt (siehe z.B. DE 198 36 352 A1). Niedertemperatur-Brennstoffzellen arbeiten bei vergleichsweise moderaten Temperaturen von 60°C bis 120°C und eignen sich daher insbesondere für mobile Anwendungen wie zum Betrieb eines Kraftfahrzeugs. Zur Kühlung von Niedertemperatur-Brennstoffzellen kann Wasser, eine Wasser-Glykol-Mischung oder eine ähnliche Flüssigkeit verwendet werden.

In Kraftfahrzeugen wird derzeit die Brennstoffzelle des Typs PEM bevorzugt eingesetzt und bei Temperaturen zwischen 60°C und 90°C betrieben.

Der als Brennstoff erforderliche Wasserstoff wird üblicherweise aus einem Drucktank bereitgestellt, da hier der Wasserstoff bei Umgebungstemperatur zur Verfügung gestellt werden kann. Diese Drucktanks sind vergleichsweise voluminös, so dass die Reichweite in mobilen Anwendungen wie beim Betrieb eines Kraftfahrzeugs durch den zur Verfügung stehenden, limitierten Speicherraum beschränkt wird. Es ist bekannt, dass auf der Basis von Metallhydriden Wasserstoffspeicher, sogenannte Metallhydrid-Speicher, gebildet werden können, die sehr viel weniger Platzbedarf als Drucktanks haben. Bei der Absorption von Wasserstoff im Metall wird Wärme frei und zur Desorption von Wasserstoff aus dem Metallhydrid muss Wärme zugeführt werden. Metallhydrid-Speicher werden daher unter Wärmeabgabe geladen und bei Wärmezufuhr wieder entladen. In Abhängigkeit vom Metallhydrid werden Metallhydrid-Speicher bei Temperaturen zwischen -40 °C und 400 °C entladen; solche mit einer höheren gewichtsbezogenen Speicherkapazität beruhen allerdings auf Mitteltemperaturhydriden oder Hochtemperaturhydriden.

Bei Mitteltemperaturhydriden beginnt die Desorption zwischen 100 °C und 200 °C bei 0,1 MPa. Sie haben Reaktionsenthalpien zwischen -40 und -65 kJ/mol H₂ und eine Speicherdichte von ca. 2,5 Gew.-% bis 5 Gew.-%. Dazu zählen u.a. Alanate wie NaAlH₄, sowie Amide wie LiNH₂ mit einer H₂-Aufnahmefähigkeit von praktisch bis zu 4,5 Gew.-%. Die optimale Wasserstoffaufnahmetemperatur liegt bei ca. 125 °C und die Wasserstoffabgabetemperatur bei 160 °C bis 185 °C. Sie sind aufgrund der relativ hohen Wasserstoffspeicherkapazität und relativ niedrigen Betriebstemperaturen interessante Kandidaten für mobile Anwendungen.

Bei Hochtemperaturhydriden beginnt die Desorption über 200 °C bei 0,1 MPa. Sie haben eine Reaktionsenthalpie über -65 kJ/mol H₂ und eine relativ hohe Speicherdichte von ca. 7 bis 10 Gew.-%. Oft aus Leichtmetallen (Magnesium, Aluminium) und/oder Nichtmetallen (Stickstoff, Bor) gebildet, wären sie für den Einsatz bei Brennstoffzellen und H₂-Verbrennungsmotoren aufgrund der sehr hohen Kapazitäten gut geeignet, jedoch sind die hohen Arbeitstemperaturen ein Hindernis für ihren Einsatz. Hochtemperaturhydride werden für Brennstoffzellen und H₂-Verbrennungs-motoren daher zur Zeit nicht eingesetzt.

Daher benötigt man im Allgemeinen für die Anwendung ein externes Heizsystem, das den Metallhydrid-Speicher zur Entladung beheizt. Ein Teil der zur Heizung des Metallhydrid-Speichers erforderlichen Energie könnte aus der sonst ungenutzten Abwärme der Brennstoffzelle entnommen werden. In der Regel wird diese Energie aber entweder als elektrischer Strom aus der Brennstoffzelle oder direkt aus dem Wasserstoff im Tank mittels eines Brenners entnommen, da die Abwärme der Brennstoffzelle wie einer Niedertemperatur-Brennstoffzelle nicht ausreichend ist, um einen Mittel- oder Hochtemperaturhydrid auf die erforderliche Temperatur zu erwärmen. Wird jedoch Energie als elektrischer Strom aus der Brennstoffzelle oder aus dem Wasserstoff im Tank eines Brenners entnommen, sinkt der Gesamtwirkungsgrad des Systems beträchtlich.

Zur Beladung des Wasserstofftanks wird dieser extern gekühlt, wodurch wiederum Energie verbraucht werden muss, die beispielsweise durch einen externen Kühler an die Umgebung abgegeben wird und wodurch der Gesamtwirkungsgrad des Systems ebenfalls sinkt. Tatsächlich ist die externe Kühlung des Metallhydrid-Speichers einer der Hauptgründe für die zur Zeit fehlende Effizienz im Vergleich zu Drucktanks.

Die JP-H07-186711 A offenbart eine von einer Kühlvorrichtung verschiedene Wärmeaustauschvorrichtung zur effektiven Nutzung der Reaktionswärme einer Metallhydridlegierung für die Kühlvorrichtung.

M.A. Sheshpoli et al.: "Thermodynamic analysis of waste heat recovery from hybrid system of proton exchange membrane fuel cell and vapor compression refrigeration cycle by recuperative organic Rankine cycle", Journal of Thermal Analysis and Clorimetry, Bd. 135, Nr. 3, 5. Mai 2018, Seiten 1699-1712, untersucht die Abwärmerückgewinnung aus einem Hybridsystem einer Niedertemperatur-Brennstoffzelle und einer Dampfkompressionskühlung.

Die DE 10 2015 006944 B3 offenbart eine Klimatisierungsanordnung für ein wasserstoffbetriebenes Fahrzeug.

### BESCHREIBUNG DER ERFINDUNG

Aufgabe der Erfindung ist es, ein effizientes System und Verfahren zum Wärmemanagement von Mittel- bis Hochtemperatursystemen wie einem an eine Niedertemperatur-Brennstoffzelle angeschlossenen Mittel- bis Hochtemperatur-Metallhydrid-Speicher zur Verfügung zu stellen, so dass das System aus Metallhydrid-Speicher und Niedertemperatur-Brennstoffzelle einen gegenüber bekannten Verfahren höheren Wirkungsgrad und/oder höhere Wasserstoffspeicherkapazität aufweist. Zudem soll das System reversibel auch eine Kühlung z.B. des Metallhydrid-Speichers bei Beladung ermöglichen.

Zur Lösung der Aufgabe wird ein Kreislaufsystem vorgeschlagen, das eine Brennstoffzelle mit einem Kühlkreislauf, einen Metallhydrid-Speicher und einen Wärmeaustauschkreislauf enthält, umfassend:
(a) einen Wärmeaustauschkreislauf umfassend ein oder mehrere Rohrleitungen, die ein Arbeitsmediumenthalten;
(b) einen in den Wärmeaustauschkreislauf integrierten ersten Wärmetauscher **6,** der mit einem Kühlkreislauf **1** einer Brennstoffzelle **4** wärmegekoppelt ist;
(c) einen in den Wärmeaustauschkreislauf stromabwärts des ersten Wärmetauschers **6** integrierten Kompressor **2;**
(d) einen in den Wärmeaustauschkreislauf stromabwärts des Kompressors **2** integrierten zweiten Wärmetauscher **3,** der mit einem Metallhydrid-Speicher **7** wärmegekoppelt ist;
(e) einen in den Wärmemittelkreislauf stromabwärts des zweiten Wärmetauschers **3** integrierten Expander **5;**
(f) eine Rückführungsleitung von dem Expander **5** zu dem ersten Wärmetauscher **6.**

In einer Ausführungsform der Erfindung ist die Brennstoffzelle **4** eine Niedertemperatur-Brennstoffzelle, bevorzugt eine Niedertemperatur-Brennstoffzelle, die bei einer Temperatur zwischen 60 °C und 130 °C, bevorzugt zwischen 60 °C und 100 °C betrieben werden kann. In einer weiteren Ausführungsform umfasst der Kühlkreislauf **1** der Brennstoffzelle **4** einen Wärmetauscher für die Kühlflüssigkeit, z.B. einen Radiator, einen Wasserkühler, o.ä., der dem Wärmetauschkreislauf nachgeschaltet ist.

In einer weiteren Ausführungsform der Erfindung liegt die Siedetemperatur bei Normaldruck (0,1013 MPa) des Arbeitsmediums unterhalb der minimalen Betriebstemperatur der Brennstoffzelle, bevorzugt etwa 1 °C bis 5 °C unter dieser minimalen Betriebstemperatur.

Wird beispielsweise eine Brennstoffzelle bei einer Temperatur von 70 °C bis 85 °C betrieben und deren Wärme mittels eines Kühlkreislaufs abgeführt, um auf das Arbeitsmedium übertragen zu werden, so wird das Arbeitsmedium vorteilhafterweise so gewählt, dass seine Siedetemperatur bei Normaldruck unter der minimalen Betriebstemperatur der Brennstoffzelle von 70 °C liegt. Gemäß diesem Beispiel wird vorzugsweise ein Arbeitsmittel mit einer Siedetemperatur von 69 °C oder weniger, weiter bevorzugt 65 °C bis 69 °C gewählt.

In einer weiteren Ausführungsform der Erfindung umfasst der Kühlkreislauf **1** der Brennstoffzelle **4** ein Kühlmedium mit einem Siedepunkt, wobei der Siedepunkt des Arbeitsmediums im Wärmetauschkreislauf unter dem Siedepunkt des Kühlmediums im Kühlkreislauf **1** der Brennstoffzelle **4** liegt. Bevorzugt ist das Kühlmittel ausgewählt aus Wasser und einer Wasser-Glykol-Mischung.

In einer weiteren Ausführungsform der Erfindung ist das Arbeitsmedium eine Flüssigkeit mit einer Siedetemperatur bei Normaldruck (0,1013 MPa) zwischen 60 °C und 130 °C, bevorzugt zwischen 65 °C und 100 °C. In einer weiteren Ausführungsform der Erfindung ist das Arbeitsmedium ein Kohlenwasserstoff mit einer Siedetemperatur bei Normaldruck (0,1013 MPa) zwischen 60 °C und 130 °C, bevorzugt zwischen 65 °C und 100 °C, beispielsweise ein Kohlenwasserstoff ausgewählt aus der Gruppe bestehend aus Hexan; wie n-Hexan, iso-Hexan oder Mischungen unterschiedlicher Hexanisomere; Heptan, wie n-Heptan, iso-Heptan oder Mischungen unterschiedlicher Heptanisomere, Octan, wie n-Octan oder iso-Octan oder Mischungen unterschiedlicher Octanisomere; oder Mischungen der vorgenannten. Bevorzugt ist das Arbeitsmedium ausgewählt aus n-Hexan und n-Heptan.

In einer weiteren Ausführungsform der Erfindung ist der erste Wärmetauscher **6** ein Verdampfer, beispielsweise ein Plattenwärmeüberträger-Verdampfer.

In einer weiteren Ausführungsform der Erfindung ist der in den Wärmeaustauschkreislauf integrierte Kompressor **2** ein Zweiphasen-Kompressor. Ein Beispiel für einen geeigneten Kompressor ist eine Kreiselpumpe zur Förderung von Flüssikeits-GasGemischen. Derartige Kreiselpupen sind beispielsweise unter der Handelsmarke EDUR® von der Firma Eduard Redlien GmbH & Co. KG erhältlich. Weitere geeignete Kompressoren sind beispielsweise Schrauben- oder Drehkompressoren, wie sie in der DE 60 220 888 T2 beschrieben sind. Prinzipiell ist aber jeder Zweiphasen-Kompressor für die Anwendung in der vorliegenden Erfindung geeignet.

In einer weiteren Ausführungsform der Erfindung umfasst der Metallhydrid-Speicher **7** mindestens ein Mitteltemperaturhydrid oder mindestens ein Hochtemperaturhydrid. In einer weiteren, bevorzugten Ausführungsform der Erfindung umfasst der Metallhydrid-Speicher Magnesium-, Aluminium-, Titan-, Mangan-, Zirkonium-Hydride und/oder Legierungen davon mit anderen Metallen wie LiAlH₄, LiBH₄, NaAlH₄, LiNH₂, Mg(NH₂)₂, NaBH₄, MgH₂, AlH₃, TiH₂, LaNi₅H₆. In einer Ausführungsform der Erfindung ist der Metallhydrid-Speicher so gewählt, dass er eine Entladungstemperatur aufweist, die über der Betriebstemperatur der Niedertemperatur-Brennstoffzelle liegt, bevorzugt eine Entladungstemperatur zwischen 100°C und 220°C, bevorzugt zwischen 120°C und 200°C. Bevorzugt liegt die Entladungstemperatur des Metallhydrid-Speichers 30°C bis 120°C, bevorzugt 50°C bis 100°C über der Betriebstemperatur der Niedertemperatur-Brennstoffzelle.

In einer weiteren Ausführungsform der Erfindung ist der zweite Wärmetauscher **6** ein Kondensator, beispielsweise ein Plattenwärmeüberträger-Kondensator.

In einer weiteren Ausführungsform der Erfindung ist der in den Wärmemittelkreislauf integrierte Expander **5** ein Zweiphasen-Turbinen-Expander, wie er beispielsweise in dem US-Patent 5,467,613 beschrieben ist, auf das hier vollständig Bezug genommen wird.

Ein geeigneter Zweiphasen-Turbinen-Expander hat eine Konstruktion mit einer Rotorscheibe mit peripheren Flügeln und einem Düsenblock, der eine Scheibe aufnimmt, und enthält eine Gruppe von Düsen, die auf die Flügel gerichtet sind. Die Düsen haben jeweils eine Einlassöffnungsplatte, um den Abbau von Dampftaschen zu erleichtern, die aus der Flüssigkeit abperlen. Die Düsen haben eine innere Geometrie, die zu einer Taille zusammenläuft und dann zu einem Auslass auseinanderläuft. Dieses Design erreicht Überschallausstoßgeschwindigkeiten und erzeugt einen Durchflussgradienten, der den Abbau von Flüssigkeitströpfchen begünstigt. Die Rotorflügel sind gebogen, um ein reines Impulsdesign zu erzeugen. Der Rotor ist eine axiale Strömungskonstruktion mit einer umlaufenden Ummantelung über den Flügeln, um einen Flüssigkeitszug zu verhindern und eine Zirkulation und ein erneutes Eindringen der Flüssigkeit zu verhindern.

Gegenstand der Erfindung ist ferner ein Verfahren zur Wärmezufuhr zu einem mit einer Niedertemperatur-Brennstoffzelle verbundenen Metallhydrid-Speicher in einem Kreislaufsystem wie oben beschrieben, bei dem:
(a) ein flüssiges Arbeitsmedium in einer ersten Stufe mittels eines ersten Wärmetauschers **6,** der mit einem Kühlreislauf **1** einer Brennstoffzelle **4** wärmegekoppelt ist, bei konstantem Druck zumindest teilweise verdampft wird;
(b) das zumindest teilweise verdampfte Arbeitsmedium in einen Kompressor **2** geführt wird, in dem das Arbeitsmedium in einer zweiten Stufe komprimiert wird, so dass sich der Druck und die Temperatur des Arbeitsmediums nach dem Komprimieren erhöht;
(c) das Arbeitsmedium durch einen zweiten Wärmetauscher **3,** der mit dem Metallhydrid-Speicher **7** wärmegekoppelt ist, geführt wird, wo das Arbeitsmedium in einer dritten Stufe bei konstantem Druck unter Abgabe von Wärmeenergie zumindest teilweise kondensiert;
(d) das zumindest teilweise kondensierte Arbeitsmedium einem Expander **5** zugeführt wird, wo das Arbeitsmittel in einer vierten Stufe entspannt wird, so dass sich der Druck und die Temperatur des Arbeitsmediums nach dem Entspannen erniedrigt;
(e) das Arbeitsmedium zur ersten Stufe zurückgeführt wird.

Zur Beladung des Metallhydrid-Speichers wird Wärme vom Metallhydrid-Speicher abgeführt. Dazu wird das bestehende System so genutzt, dass die Leistung des Kompressors gedrosselt wird, um das Arbeitsmedium in Bewegung zu halten. Das Arbeitsmedium verdampft zumindest teilweise durch Zufuhr von Wärme aus dem Metallhydrid-Speicher, der nun zur Wärmequelle wird, und kondensiert mit dem Kontakt zum Kühlmittel der Brennstoffzelle, deren Betrieb ruht. Dementsprechend ist Gegenstand der Erfindung auch ein Verfahren zur Wärmeabfuhr von einem mit einer Niedertemperatur-Brennstoffzelle verbundenen Metallhydrid-Speicher in einem Kreislaufsystem wie oben beschrieben, bei dem:
(a) ein Arbeitsmedium in einer ersten Stufe mittels eines zweiten Wärmetauschers **3,** der mit dem Metallhydrid-Speicher **7** wärmegekoppelt ist, bei konstantem Druck unter Wärmezufuhr vom Metallhydrid-Speicher zumindest teilweise verdampft wird;
(b) das zumindest teileweise verdampfte Arbeitsmedium durch einen Expander **5** geführt wird, in dem das zumindest teilweise verdampfte Arbeitsmittel in einer zweiten Stufe gegebenenfalls entspannt wird, so dass sich der Druck und/oder die Temperatur des Arbeitsmediums nach dem Komprimieren erniedrigt;
(c) das Arbeitsmedium einem ersten Wärmetauscher **6,** der mit dem Kühlkreislauf **1** einer Brennstoffzelle **4** wärmegekoppelt ist, zugeführt wird, in dem das Arbeitsmedium in einer dritten Stufe bei konstantem Druck unter Wärmeabgabe zumindest teilweise kondensiert wird;
(d) das zumindest teilweise kondensierte Arbeitsmedium einem Kompressor **2** zugeführt wird, der so betrieben wird, dass sich das Arbeitsmedium in dem Kreislaufsystem bewegt;
(e) das Arbeitsmedium zur ersten Stufe zurückgeführt wird.

### DETAILLIERTE BESCHREIBUNG DER ERFINDUNG

Beispielhaft werden das erfindungsgemäße System und die erfindungsgemäßen Verfahren anhand der nachfolgenden Figuren erläutert, die die Erfindung nicht einschränken sollen. Darin sind:
**Fig. 1** eine schematische Darstellung des erfindungsgemäßen Systems;
**Fig. 2** eine schematische Darstellung eines erfindungsgemäßen Verfahrens zur Wärmezufuhr zu einem mit einer Niedertemperatur-Brennstoffzelle verbundenen Metallhydrid-Speicher zur Entladung des Metallhydrid-Speichers in einem Kreislaufsystem;
**Fig. 3** eine schematische Darstellung eines erfindungsgemäßen Verfahrens zur Wärmeabfuhr von einem mit einer Niedertemperatur-Brennstoffzelle verbundenen Metallhydrid-Speicher zur Beladung eines Metallhydrid-Speichers mit Wasserstoff in einem Kreislaufsystem.

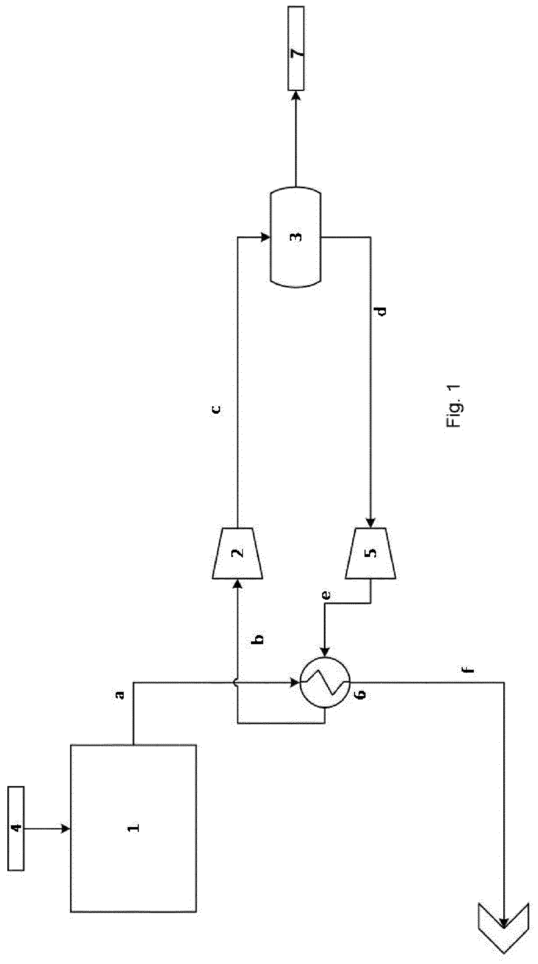

In **Fig. 1** wird ein erfindungsgemäßes System schematisch illustriert. Eine Brennstoffzelle **4** liefert im Betrieb Wärmeenergie an einen daran angeschlossenen Kühlkreislauf **1.** Dieser ist durch Rohrleitung **a** mit einem ersten Wärmetauscher **6** verbunden, in dem der Kühlreislauf Wärme an ein Arbeitsmittel abgibt, oder von dem Arbeitsmittel aufnimmt, wenn der Metallhydrid-Speicher beladen wird. Über eine Rohrleitung **b** wird das Arbeitsmittel von dem ersten Wärmetauscher zu einem Kompressor **2** geführt, der das Arbeitsmittel bei Betrieb der Brennstoffzelle verdichten kann oder bei Beladung des Metallhydrid-Speichers das Arbeitsmittel in Bewegung versetzt. Über eine weitere Rohrleitung **c** wird das Arbeitsmittel von dem Kompressor **2** zu einem zweiten Wärmetauscher **3** geleitet. Dort wird bei Betrieb der Brennstoffzelle **4** und Entladung des Metallhydrid-Speichers **7** Wärme an diesen abgegeben. Bei Beladung des Metallhydrid-Speichers **7** wird Wärme von dem Metallhydrid-Speicher **7** an das Arbeitsmittel abgegeben. Von dem zweiten Wärmetauscher **3** führt eine weitere Rohleitung **d** zu einem Expander **5,** wie einer Turbine , wo das Arbeitsmittel entspannt werden kann. Von dem Expander **5** führt eine weitere Rohleitung **e** zurück zu dem ersten Wärmetauscher **6.**

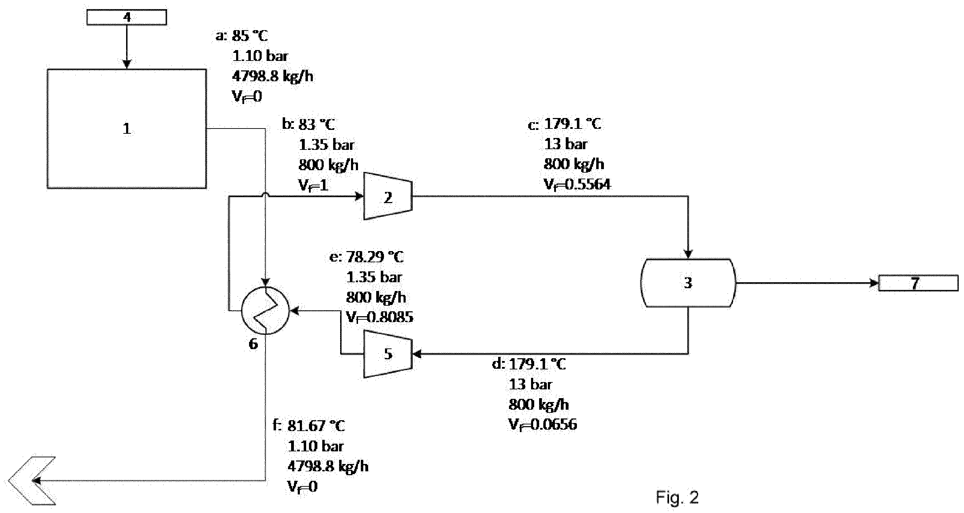

In **Fig. 2** wird ein erfindungsgemäßes Verfahren zur Wärmezufuhr zu einem mit einer Niedertemperatur-Brennstoffzelle **4** verbundenen Metallhydrid-Speicher **7** mittels des erfindungsgemäßen Systems illustriert. Die Niedertemperatur-Brennstoffzelle **4** wird bei etwa 70 °C bis 85 °C betrieben, wobei die entstehende Wärme mittels ersten Kühlkreislaufs **1** davon abgeführt wird. Beispielsweise kann ein Wasser/Glykol-Gemisch als Arbeitsmittel in dem ersten Kühlkreislauf verwendet werden. Der Metallhydrid-Speicher wird bei etwa 160 °C bis 185 °C entladen. Als Arbeitsmittel wird in dem erfindungsgemäßen System n-Hexan verwendet, das bei Normaldruck einen Siedepunkt von 69 °C hat. Das Arbeitsmittel wird ein einem ersten Wärmetauscher **6** unter einem konstantem Druck von etwa 0,135 MPa auf eine Temperatur von 83 °C erwärmt, wobei mindestens ein Teil des Arbeitsmittels von dem flüssigen in den gasförmigen Zustand übergeht. In einem sich anschließenden Kompressor **2** wird das überwiegend gasförmige Arbeitsmittel verdichtet, so dass sich der Druck des Arbeitsmittels auf etwa 1,3 MPa und die Temperatur auf etwa 179 °C erhöht. Dabei kondensiert thermodynamisch bedingt ein Teil des Arbeitsmittels. Bei dem an den Metallhydrid-Speicher angeschlossenen zweiten Wärmetauscher **3,** vorzugsweise eine Ummantelung des Metallhydrid-Speichers, kondensiert bei gleichbleibenden Druck ein weiterer Teil der Dampffraktion und überträgt somit Wärme über den zweiten Wärmetauscher **3** an den Metallhydrid-Speicher **7.** Das kondensierte Arbeitsmittel mit einem Druck von etwa 1,3 MPa und einer Temperatur von etwa 179 °C wird von dem zweiten Wärmetauscher **3** zu einer Turbine **5** geführt, wo das Arbeitsmittel unter Abgabe von Bewegungsenergie entspannt wird. Die Temperatur des Arbeitsmittels sinkt dabei auf etwa 78 °C und der Druck auf etwa 0,135 MPa. Von der Turbine wird das Arbeitsmittel wieder in den ersten Wärmetauscher **6** zurückgeführt, wo es wieder mindestens teilweise bei gleichbleibendem Druck verdampft wird.

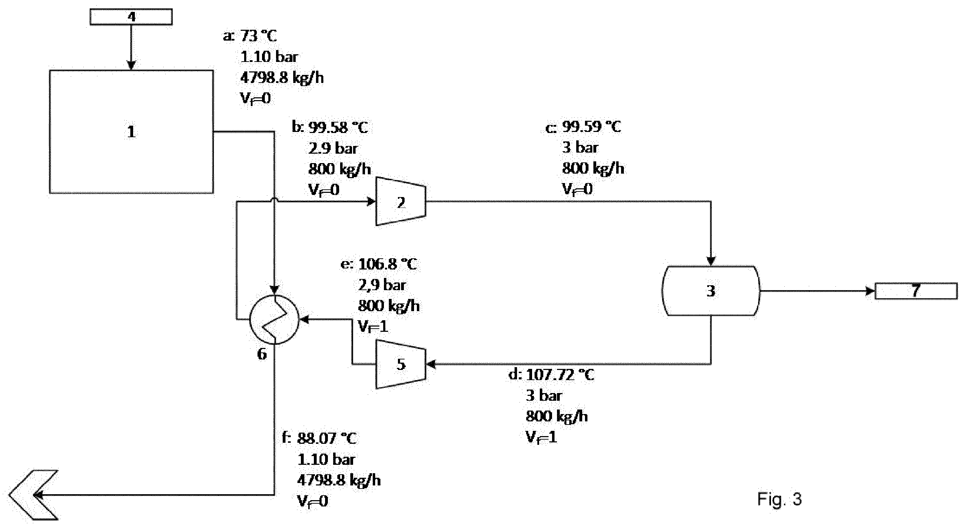

In **Fig. 3** wird ein erfindungsgemäßes Verfahren zur Wärmeabfuhr von einem mit einer Niedertemperatur-Brennstoffzelle **4** verbundenen Metallhydrid-Speicher **7** mittels des erfindungsgemäßen Systems illustriert. Der Kompressor wird nur als Pumpe verwendet, um den Arbeitsmittelfluss sicherzustellen. Auch der Expander **5** nimmt keine bis nur sehr wenig Leistung ab. Das von einem ersten Wärmetauscher **6** zu einem Kompressor **2** geleitete Arbeitsmittel, hier wieder n-Hexan, wird in flüssiger Phase bei einer Temperatur von etwa 99,6 °C und einem Druck von etwa 0,3 MPa zu einem zweiten Wärmetauscher **3** geleitet, wo das System Wärme von einem zu beladenden Metallhydrid-Speicher empfängt. Das Arbeitsmittel wird auf eine Temperatur von etwa 107,7 °C erwärmt, wobei es bei einem konstanten Druck von 0,3 MPa zumindest teilweise verdampft. Über einen Expander **5,** wie einer Turbine, wo das Arbeitsmittel auf etwa 106,8 °C abgekühlt wird, wird das Arbeitsmittel einem ersten Wärmetauscher **6** zugeführt, wo es unter gleichbleibenden Druck von etwa 0,29 MPa bis auf eine Temperatur von etwa 99,6 °C abgekühlt wird und so Wärme an den Kühlkreislauf der Brennstoffzelle überträgt. Die an den Kühlkreislauf der Brennstoffzelle übertragene Wärme wird durch den nachgeschalteten Wärmetauscher (Radiator, Wasserkühler oder ähnlichem) abgeführt.

### Figurenbezeichnungen

- **1**: Kühlkreislauf einer Brennstoffzelle
- **2**: Kompressor
- **3**: zweiter Wärmetauscher
- **4**: Niedertemperatur-Brennstoffzelle
- **5**: Turbine
- **6**: erster Wärmetauscher
- **7**: Metallhydrid-Speicher
- **a**: Rohrleitung
- **b**: Rohrleitung
- **c**: Rohrleitung
- **d**: Rohrleitung
- **e**: Rohrleitung

## Patentansprüche

1. Kreislaufsystem, das eine Brennstoffzelle mit einem Kühlkreislauf, einen Metallhydrid-Speicher und einen Wärmeaustauschkreislauf enthält, umfassend:
(a) einen Wärmeaustauschkreislauf umfassend ein oder mehrere Rohrleitungen, die ein Arbeitsmedium enthalten;
(b) einen in den Wärmeaustauschkreislauf integrierten ersten Wärmetauscher (6), der mit einem Kühlkreislauf (1) einer Brennstoffzelle (4) wärmegekoppelt ist;
(c) einen in den Wärmeaustauschkreislauf stromabwärts des ersten Wärmetauschers (6) integrierten Kompressor (2) ;
(d) einen in den Wärmeaustauschkreislauf stromabwärts des Kompressors (2) integrierten zweiten Wärmetauscher (3), der mit einem Metallhydrid-Speicher (7) wärmegekoppelt ist;
(e) einen in den Wärmemittelkreislauf stromabwärts des zweiten Wärmetauschers (3) integrierten Expander (5);
(f) eine Rückführungsleitung von dem Expander (5) zu dem ersten Wärmetauscher (6).

2. System nach Anspruch 1, **dadurch gekennzeichnet, dass** das Arbeitsmedium eine Flüssigkeit mit einer Siedetemperatur bei Normaldruck (0,1013 MPa) zwischen 60°C und 130°C ist.

3. System nach Anspruch 2, **dadurch gekennzeichnet, dass** das Arbeitsmedium eine Flüssigkeit mit einer Siedetemperatur bei Normaldruck (0,1013 MPa) zwischen 65°C und 100°C ist.

4. System nach Anspruch 2 oder 3, **dadurch gekennzeichnet, dass** das Arbeitsmedium ein Kohlenwasserstoff ist.

5. System nach Anspruch 4, **dadurch gekennzeichnet, dass** das Arbeitsmedium n-Hexan, n-Heptan oder Mischungen davon ist.

6. System nach einem der vorgehenden Ansprüche, **dadurch gekennzeichnet, dass** die Niedertemperatur-Brennstoffzelle bei einer Temperatur zwischen 60°C und 130°C betrieben werden kann.

7. System nach Anspruch 6, **dadurch gekennzeichnet, dass** die Niedertemperatur-Brennstoffzelle bei einer Temperatur zwischen 70°C und 100°C betrieben werden kann.

8. System nach einem der vorgehenden Ansprüche, **dadurch gekennzeichnet, dass** der erste Wärmetauscher (6) ein Verdampfer ist.

9. System nach Anspruch 8, **dadurch gekennzeichnet, dass** der erste Wärmetauscher (6) ein Plattenwärmeüberträger-Verdampfer ist.

10. System nach einem der vorgehenden Ansprüche, **dadurch gekennzeichnet, dass** der Kompressor (2) ein Zweiphasen-Kompressor ist.

11. System nach einem der vorgehenden Ansprüche, **dadurch gekennzeichnet, dass** der zweite Wärmetauscher (3) ein Kondensator ist.

12. System nach Anspruch 8, **dadurch gekennzeichnet, dass** der zweite Wärmetauscher (3) ein Plattenwärmeüberträger-Kondensator ist.

13. System nach einem der vorgehenden Ansprüche, **dadurch gekennzeichnet, dass** der Expander (5) ein Zweiphasen-Turbinen-Expander ist.

14. Verfahren zur Wärmezufuhr zu einem mit einer Niedertemperatur-Brennstoffzelle verbundenen Metallhydrid-Speicher in einem Kreislaufsystem gemäß einem der vorgehenden Ansprüche, bei dem:
(a) ein flüssiges Arbeitsmedium in einer ersten Stufe mittels eines ersten Wärmetauschers (6), der mit einem Kühlreislauf (1) einer Brennstoffzelle (4) wärmegekoppelt ist, bei konstantem Druck zumindest teilweise verdampft wird;
(b) das zumindest teilweise verdampfte Arbeitsmedium in einen Kompressor (2) geführt wird, in dem das Arbeitsmedium in einer zweiten Stufe komprimiert wird, so dass sich der Druck und die Temperatur des Arbeitsmediums nach dem Komprimieren erhöhen;
(c) das Arbeitsmedium durch einen zweiten Wärmetauscher (3), der mit dem Metallhydrid-Speicher (7) wärmegekoppelt ist, geführt wird, wo das Arbeitsmedium in einer dritten Stufe bei konstantem Druck unter Abgabe von Wärmeenergie zumindest teilweise kondensiert;
(d) das zumindest teilweise kondensierte Arbeitsmedium einem Expander (5) zugeführt wird, wo das Arbeitsmittel in einer vierten Stufe entspannt wird, so dass sich der Druck und die Temperatur des Arbeitsmediums nach dem Entspannen erniedrigt;
(e) das Arbeitsmedium zur ersten Stufe zurückgeführt wird.

15. Verfahren zur Wärmeabfuhr von einem mit einer Niedertemperatur-Brennstoffzelle verbundenen Metallhydrid-Speicher in einem Kreislaufsystem gemäß einem der Ansprüche 1 bis 13, bei dem:
(a) ein Arbeitsmedium in einer ersten Stufe mittels eines zweiten Wärmetauschers (3), der mit dem Metallhydrid-Speicher (7) wärmegekoppelt ist, bei konstantem Druck unter Wärmezufuhr vom Metallhydrid-Speicher zumindest teilweise verdampft wird;
(b) das zumindest teilweise verdampfte Arbeitsmedium durch einen Expander (5) geführt wird, in dem das zumindest teilweise kondensierte Arbeitsmittel in einer zweiten Stufe gegebenenfalls entspannt wird, so dass sich der Druck und/oder die Temperatur des Arbeitsmediums erniedrigen;
(c) das Arbeitsmedium einem ersten Wärmetauscher (6), der mit dem Kühlkreislauf (1) einer Brennstoffzelle (4) wärmegekoppelt ist, zugeführt wird, in dem das Arbeitsmedium in einer dritten Stufe bei konstantem Druck unter Wärmeabgabe zumindest teilweise kondensiert wird;
(d) das zumindest teilweise kondensierte Arbeitsmedium einem Kompressor (2) zugeführt wird, der so betrieben wird, dass sich das Arbeitsmedium in dem Kreislaufsystem bewegt;
(e) das Arbeitsmedium zur ersten Stufe zurückgeführt wird.

16. System nach einem der Ansprüche 1 bis 13, **dadurch gekennzeichnet, dass** der Kühlkreislauf (1) der Brennstoffzelle (4) über zusätzliche Mittel zur Wärmeableitung verfügt, die dem ersten Wärmetauscher nachgeschaltet sind.

17. System nach Anspruch 16, **dadurch gekennzeichnet, dass** die zusätzlichen Mittel zur Wärmeableitung ausgewählt sind aus Radiatoren.

## Claims

1. A circulation system, which contains a fuel cell with a cooling circuit, a metal hydride store and a heat exchange circuit, comprising:
(a) a heat exchange circuit comprising one or more pipes which contain a working medium;
(b) a first heat exchanger (6) which is integrated into the heat exchange circuit and is heat-coupled to a cooling circuit (1) of a fuel cell (4);
(c) a compressor (2) integrated into the heat exchange circuit downstream of the first heat exchanger (6);
(d) a second heat exchanger (3) which is integrated into the heat exchange circuit downstream of the compressor (2) and is heat-coupled to a metal hydride store (7) ;
(e) an expander (5) integrated into the heat transfer medium circuit downstream of the second heat exchanger (3) ;
(f) a return conduit from the expander (5) to the first heat exchanger (6).

2. The system as claimed in claim 1, **characterized in that** the working medium is a liquid having a boiling point at atmospheric pressure (0,1013 MPa) between 60°C and 130°C.

3. The system as claimed in claim 2, **characterized in that** the working medium is a liquid having a boiling point at atmospheric pressure (0,1013 MPa) between 65°C and 100°C.

4. The system as claimed in claim 2 or 3, **characterized in that** the working medium is a hydrocarbon.

5. The system as claimed in claim 4, **characterized in that** the working medium is n-hexane, n-heptane or mixtures thereof.

6. The system as claimed in any of the preceding claims, **characterized in that** the low-temperature fuel cell can be operated at a temperature between 60°C and 130°C.

7. The system as claimed in claim 6, **characterized in that** the low-temperature fuel cell can be operated at a temperature between 70°C and 100°C.

8. The system as claimed in any of the preceding claims, **characterized in that** the first heat exchanger (6) is a vaporizer.

9. The system as claimed in claim 8, **characterized in that** the first heat exchanger (6) is a plate heat exchanger vaporizer.

10. The system as claimed in any of the preceding claims, **characterized in that** the compressor (2) is a two-phase compressor.

11. The system as claimed in any of the preceding claims, **characterized in that** the second heat exchanger (3) is a condenser.

12. The system as claimed in claim 8, **characterized in that** the second heat exchanger (3) is a plate heat exchanger condenser.

13. The system as claimed in any of the preceding claims, **characterized in that** the expander (5) is a two-phase turbine expander.

14. A method for supplying heat to a metal hydride store connected to a low-temperature fuel cell in a circulation system as claimed in any of the preceding claims, wherein:
(a) a liquid working medium is at least partially vaporized at constant pressure in a first stage by means of a first heat exchanger (6) which is heat-coupled to a cooling circuit (1) of a fuel cell (4);
(b) the at least partially vaporized working medium is fed into a compressor (2) in which the working medium is compressed in a second stage so that the pressure and the temperature of the working medium are increased after compression;
(c) the working medium is conveyed through a second heat exchanger (3) which is heat-coupled to the metal hydride store (7), where the working medium at least partially condenses at constant pressure in a third stage with release of heat energy;
(d) the at least partially condensed working medium is fed to an expander (5) where the working medium is depressurized in a fourth stage so that the pressure and the temperature of the working medium are decreased after depressurization;
(e) the working medium is recirculated to the first stage.

15. A method for removing heat from a metal hydride store connected to a low-temperature fuel cell in a circulation system as claimed in any of claims 1 to 13, wherein:
(a) a working medium is at least partially vaporized at constant pressure with introduction of heat from the metal hydride store in a first stage by means of a second heat exchanger (3) which is heat-coupled with the metal hydride store (7);
(b) the at least partially vaporized working medium is conveyed through an expander (5) in which the at least partially condensed working medium is optionally depressurized in a second stage so that the pressure and/or the temperature of the working medium is decreased;
(c) the working medium is fed into a first heat exchanger (6) which is heat-coupled with the cooling circuit (1) of a fuel cell (4), in which heat exchanger the working medium is at least partially condensed at constant pressure with release of heat in a third stage;
(d) the at least partially condensed working medium is fed into a compressor (2) which is operated in such a way that the working medium moves in the circulation system;
(e) the working medium is recirculated to the first stage.

16. The system as claimed in any of claims 1 to 13, **characterized in that** the cooling circuit (1) of the fuel cell (4) has additional means for removal of heat which are located downstream of the first heat exchanger.

17. The system as claimed in claim 16, **characterized in that** the additional means for the removal of heat are selected from among radiators.

## Revendications

1. Système de circuit qui comporte une pile à combustible dotée d'un circuit de refroidissement, un réservoir d'hydrure métallique et un circuit d'échange de chaleur, comprenant :
(a) un circuit d'échange de chaleur comportant une ou plusieurs conduites qui contiennent un fluide de travail ;
(b) un premier échangeur de chaleur (6) qui est intégré dans le circuit d'échange de chaleur et est couplé sur le plan thermique à un circuit de refroidissement (1) d'une pile à combustible (4) ;
(c) un compresseur (2) intégré dans le circuit d'échange de chaleur, en aval du premier échangeur de chaleur (6) ;
(d) un deuxième échangeur de chaleur (3) qui est intégré dans le circuit d'échange de chaleur, en aval du compresseur (2), et qui est couplé sur le plan thermique à un réservoir d'hydrure métallique (7) ;
(e) un détendeur (5) intégré dans le circuit de caloporteur, en aval du deuxième échangeur de chaleur (3) ;
(f) une conduite de retour depuis le détendeur (5) vers le premier échangeur de chaleur (6).

2. Système selon la revendication 1, **caractérisé en ce que** le fluide de travail est un liquide ayant une température d'ébullition à pression normale (0,1013 MPa) qui est comprise entre 60 °C et 130 °C.

3. Système selon la revendication 2, **caractérisé en ce que** le fluide de travail est un liquide ayant une température d'ébullition à pression normale (0,1013 MPa) qui est comprise entre 65 °C et 100 °C.

4. Système selon la revendication 2 ou 3, **caractérisé en ce que** le fluide de travail est un hydrocarbure.

5. Système selon la revendication 4, **caractérisé en ce que** le fluide de travail est constitué de n-hexane, de n-heptane ou de mélanges de ceux-ci.

6. Système selon l'une des revendications précédentes, **caractérisé en ce que** la pile à combustible basse température peut fonctionner à une température comprise entre 60 °C et 130 °C.

7. Système selon la revendication 6, **caractérisé en ce que** la pile à combustible basse température peut fonctionner à une température comprise entre 70 °C et 100 °C.

8. Système selon l'une des revendications précédentes, **caractérisé en ce que** le premier échangeur de chaleur (6) est un évaporateur.

9. Système selon la revendication 8, **caractérisé en ce que** le premier échangeur de chaleur (6) est un évaporateur à transfert de chaleur par plaques.

10. Système selon l'une des revendications précédentes, **caractérisé en ce que** le compresseur (2) est un compresseur à deux phases.

11. Système selon l'une des revendications précédentes, **caractérisé en ce que** le deuxième échangeur de chaleur (3) est un condenseur.

12. Système selon la revendication 8, **caractérisé en ce que** le deuxième échangeur de chaleur (3) est un condenseur de transfert de chaleur par plaques.

13. Système selon l'une des revendications précédentes, **caractérisé en ce que** le détendeur (5) est un turbodétendeur à deux phases.

14. Procédé d'apport de chaleur à un réservoir d'hydrure métallique relié à une pile à combustible basse température, dans un système de circuit selon l'une des revendications précédentes, selon lequel :
(a) un fluide de travail liquide est évaporé au moins en partie à pression constante dans un premier étage, au moyen d'un premier échangeur de chaleur (6) qui est couplé sur le plan thermique à un circuit de refroidissement (1) d'une pile à combustible (4) ;
(b) le fluide de travail, évaporé au moins en partie, est acheminé dans un compresseur (2) dans lequel le fluide de travail est comprimé dans un deuxième étage, de sorte que la pression et la température du fluide de travail augmentent après la compression ;
(c) le fluide de travail passe dans un deuxième échangeur de chaleur (3) qui est couplé sur le plan thermique au réservoir d'hydrure métallique (7), où le fluide de travail est condensé au moins en partie à pression constante dans un troisième étage, en dégageant de l'énergie thermique ;
(d) le fluide de travail, condensé au moins en partie, est acheminé à un détendeur (5) dans lequel le fluide de travail est détendu dans un quatrième étage, de sorte que la pression et la température du fluide de travail diminuent après la détente ;
(e) le fluide de travail est ramené au premier étage.

15. Procédé d'évacuation de chaleur depuis un réservoir d'hydrure métallique relié à une pile à combustible basse température, dans un système de circuit selon l'une des revendications 1 à 13, selon lequel :
(a) un fluide de travail est évaporé au moins en partie à pression constante et avec apport de chaleur depuis le réservoir d'hydrure métallique, dans un premier étage, au moyen d'un deuxième échangeur de chaleur (3) qui est couplé sur le plan thermique au réservoir d'hydrure métallique (7) ;
(b) le fluide de travail, évaporé au moins en partie, passe dans un détendeur (5) dans lequel le fluide de travail, condensé au moins en partie, est le cas échéant détendu dans un deuxième étage, de sorte que la pression et/ou la température du fluide de travail diminuent ;
(c) le fluide de travail est acheminé à un premier échangeur de chaleur (6) qui est couplé sur le plan thermique au circuit de refroidissement (1) d'une pile à combustible (4) et dans lequel le fluide de travail est condensé au moins en partie à pression constante dans un troisième étage, en dégageant de la chaleur ;
(d) le fluide de travail, condensé au moins en partie, est acheminé à un compresseur (2) qui fonctionne de manière à ce que le fluide de travail se déplace dans le système de circuit ;
(e) le fluide de travail est ramené au premier étage.

16. Système selon l'une des revendications 1 à 13, **caractérisé en ce que** le circuit de refroidissement (1) de la pile à combustible (4) dispose de moyens supplémentaires pour évacuer la chaleur, qui sont placés en aval du premier échangeur de chaleur.

17. Système selon la revendication 16, **caractérisé en ce que** les moyens supplémentaires destinés à l'évacuation de chaleur sont choisis parmi des radiateurs.
